# EUROPÄISCHE PATENTANMELDUNG

(11) **EP 4 447 298 A1**
(43) Veröffentlichungstag der Anmeldung: **16.10.2024**
(21) Anmeldenummer: 23186723.5
(22) Anmeldetag: 20.07.2023
(51) Int. Cl.: H02K 15/03, H02K 15/14

(54) **HARZVERSIEGELUNGSVORRICHTUNG UND HARZVERSIEGELUNGSVERFAHREN ZUR BEFESTIGUNG VON MAGNETEN IN ROTOREN**

(30) Priorität: 02.03.2023 DE 102023000788
(71) Anmelder: Grob-Werke GmbH & Co. KG, 87719 Mindelheim (DE)
(72) Erfinder: Klausner, Michael, 86807 Buchloe (DE); Wenzl, Christopher, 86856 Hiltenfingen (DE)
(74) Vertreter: KASTEL Patentanwälte PartG mbB

(57) **Zusammenfassung**

Zur Verringerung von Kosten und Aufwand und verbesserten Prozessführung einer industriellen Großserienfertigung von Rotoren schafft die Erfindung eine Harzversiegelungsvorrichtung (10) zur Fixierung von Magneten (12) in einem Blechpaket (14) eines Rotorkerns (16) mittels Harzversiegelung, umfassend:
eine Presse (20) mit einem ersten und einem zweiten Formwerkzeug (22, 24), die mittels eines Aktors (26) zum Verpressen wenigstens eines darin aufgenommenen Blechpakets (14) mit Magneten (12) aufeinander zu und voneinander weg bewegbar sind, und
eine Harzzuführeinrichtung (28) zum Zuführen und Einpressen des Harzes in Zwischenräume zwischen Presse (20), Blechpaket (14) und Magneten (12),
wobei wenigstens eines der Formwerkzeuge (22, 24) eine Aufnahme (32) zum unmittelbaren Aufnehmen des wenigstens einen Blechpakets (14) aufweist, die eine Auflagefläche (34) zum Auflegen des wenigstens einen Blechpakets (14) und eine von der Auflagefläche (34) vorspringende Positioniereinrichtung (36) aufweist, die dazu eingerichtet ist, in eine Rotorwellenöffnung (18) des wenigstens einen Blechpakets (14) einzugreifen und/oder das wenigstens eine Blechpaket (14) an seinem Außendurchmesser einzufassen.

## Beschreibung

Die Erfindung betrifft eine Harzversiegelungsvorrichtung zur Fixierung von Magneten in einem Blechpaket eines Rotorkerns mittels Harzversiegelung. Weiter betrifft die Erfindung eine Anordnung mit einer solchen Harzversiegelungsvorrichtung sowie eine Verwendung einer solchen Harzversiegelungsvorrichtung. Weiter betrifft die Erfindung ein im Zuge einer Herstellung eines Rotors einer elektrischen Maschine durchzuführendes Harzversiegelungsverfahren zum Versiegeln von Magneten in oder an wenigstens einem Blechpaket eines Rotorkerns sowie ein Computerprogramm.

Insbesondere liegt die Erfindung auf dem Gebiet der industriellen Großserienfertigung von Rotoren für elektrische Maschinen, wie z.B. Elektromotoren, vorzugsweise Elektromotoren für die Elektromobilität, die insbesondere als Antrieb in elektromotorischen Kraftfahrzeugen, wie PKW oder LKW einzusetzen sind.

Bevorzugte Ausgestaltungen der Erfindung werden bei einem Prozess der Magnetfixierung in Rotorblechpaketen mittels EMC (Epoxy Molding Compound, "resin") und im Speziellen bei einem Handling und Ausrichten von Einzelblechpaketen (substacks) beim Molding ohne Rotorwelle verwendet.

Eine zentrale Herausforderung beim Molding ohne Rotorwelle stellt die "lose" Positionierung und Ausrichtung der Einzelblechpakete in der Moldingpresse dar - insbesondere, wenn die Einzelblechpakete zueinander verschränkt sind, also insbesondere einen Winkelversatz um die Rotorwellenbohrungsachse aufweisen. Die Positionierung muss so ausgeführt sein, dass das EMC beim Moldingvorgang durch alle Einzelblechpakete von der Angussseite bis zur Entlüftungsseite fließen kann und so eine gleichmäßige, prozesssichere Fixierung der Magnete in allen Einzelblechpaketen ("substack") des gesamten Blechpaketstapels ("stack") gegeben ist.

Zum Stand der Technik wird auf die EP 2 421 127 B1 verwiesen, die eine Harzversiegelungsvorrichtung zur Fixierung von Magneten in einem Blechpaket eines Rotorkerns mittels Harzversiegelung offenbart, welche eine Presse mit einem ersten und einem zweiten Formwerkzeug, die mittels eines Aktors zum Verpressen wenigstens eines darin aufgenommenen Blechpakets mit Magneten aufeinander zu und voneinander weg bewegbar sind, und eine Harzzuführeinrichtung zum Zuführen und Einpressen des Harzes in Zwischenräume zwischen Presse, Blechpaket und Magneten aufweist. Die bekannte Harzversiegelungsvorrichtung nutzt einen Werkstückträger, auf dem die Einzelblechpakete über einen zentrischen, in der Rotorwellenbohrung verlaufenden Dorn hinsichtlich der Position orientiert sind. Mithilfe des Werkstückträgers erfolgt die Be- und Entladung der Moldingpresse mit dem Werkstück.

Die Erfindung hat sich zur Aufgabe gestellt, Vorrichtungen und Verfahren zur Harzversiegelung zwecks Fixierens von Magneten in einem Rotorkern zu Verfügung zu stellen, die geringere Kosten und Aufwand für Errichtung und Wartung verursachen, eine einfachere Automatisierung ermöglichen und hinsichtlich der einheitlichen Prozessführung verbessert sind.

Zum Lösen dieser Aufgabe schafft die Erfindung eine Harzversiegelungsvorrichtung nach Anspruch 1. Eine Anordnung mit einer Harzversiegelungsvorrichtung, eine Verwendung einer solchen Harzversiegelungsvorrichtung, ein Harzversiegelungsverfahren sowie ein Computerprogramm mit Anweisungen zu dessen Durchführung sind in Nebenansprüchen angegeben.

Vorteilhafte Ausgestaltungen sind Gegenstand der Unteransprüche.

Die Erfindung schafft gemäß einem Aspekt davon eine Harzversiegelungsvorrichtung zur Fixierung von Magneten in einem Blechpaket eines Rotorkerns mittels Harzversiegelung, umfassend:
eine Presse mit einem ersten und einem zweiten Formwerkzeug, die mittels eines Aktors zum Verpressen wenigstens eines darin aufgenommenen Blechpakets mit Magneten aufeinander zu und voneinander weg bewegbar sind, und
eine Harzzuführeinrichtung zum Zuführen und Einpressen des Harzes in Zwischenräume zwischen Presse, Blechpaket und Magneten,
wobei wenigstens eines der Formwerkzeuge eine Aufnahme zum unmittelbaren Aufnehmen des wenigstens einen Blechpakets aufweist, die eine Auflagefläche zum Auflegen des wenigstens einen Blechpakets und eine von der Auflagefläche vorspringende Positioniereinrichtung aufweist, die dazu eingerichtet ist, in eine Rotorwellenöffnung des wenigstens einen Blechpakets einzugreifen und/oder das wenigstens eine Blechpaket an seinem Außendurchmesser einzufassen.

Es ist bevorzugt, dass die Positioniereinrichtung einen Aufnahmedorn zum Eingreifen in die Rotorwellenöffnung aufweist.

Es ist bevorzugt, dass die Positioniereinrichtung eine Aufnahmehülse zum Umgreifen des wenigstens einen Blechpakets aufweist.

Eine vorteilhafte Ausgestaltung der Harzversiegelungsvorrichtung hat eine Heizeinrichtung zum Beheizen der Positioniereinrichtung.

Es ist bevorzugt, dass das erste Formwerkzeug ein unteres Formwerkzeug ist, das mit der Positioniereinrichtung versehen ist.

Es ist bevorzugt, dass die Positioniereinrichtung austauschbar an der Auflagefläche vorgesehen ist.

Nach einigen Ausführungsformen umfasst die Harzversiegelungsvorrichtung ein Sortiment unterschiedlich dimensionierter Positioniereinrichtungen.

Es ist bevorzugt, dass die Aufnahme eine Ausrichteinrichtung aufweist, die zum Positionieren des wenigstens einen Blechpakets in einer Umfangsrichtung durch formschlüssigen Eingriff mit dem wenigstens einen Blechpaket eingerichtet ist.

Es ist bevorzugt, dass die Ausrichteinrichtung wenigstens ein Eingriffselement aus der Gruppe aufweist, die eine Feder an der Positioniereinrichtung zum Bilden einer Nut-Feder-Verbindung durch Eingreifen in eine Nut an dem wenigstens einen Blechpaket, eine Nut an der Positioniereinrichtung zum Bilden einer Nut-Feder-Verbindung zusammen mit einer Feder an dem wenigstens einen Blechpaket, eine Ausnehmung an der Auflagefläche zur Aufnahme eines an dem Blechpaket vorgesehenen Indexstifts und einen Indexstift, der von der Auflagefläche zum Eingreifen in eine sich axial erstreckende Ausnehmung an dem Blechpaket vorsteht, umfasst.

Es ist bevorzugt, dass die Positioniereinrichtung Es ist bevorzugt, eine Einstelleinrichtung zum Einstellen des Durchmessers von Kontaktflächen der Positioniereinrichtung aufweist.

Es ist bevorzugt, dass die Positioniereinrichtung radial verstellbare Spannbacken aufweist.

Vorzugsweise weist die Harzversiegelungsvorrichtung eine elektronische Steuerung, insbesondere mit Prozessor und Speicher, in dem ein Computerprogramm gespeichert ist, auf oder wird durch solche eine externe Steuerung angesteuert.

Gemäß einem weiteren Aspekt schafft die Erfindung eine Anordnung umfassend eine Harzversiegelungsvorrichtung gemäß einer der voranstehenden Ausgestaltungen und wenigstens ein darin zu haltendes Blechpaket für einen Rotorkern, wobei das wenigstens eine Blechpaket Magnetaufnahmekavitäten zur Aufnahme von Magneten und eine Rotorwellenöffnung zur Aufnahme einer Rotorwelle aufweist.

Gemäß einem weiteren Aspekt schafft die Erfindung eine Verwendung einer Harzversiegelungsvorrichtung gemäß einer der voranstehenden Ausgestaltungen bei der Harzversiegelung, bei der Magnete an oder in dem wenigstens einen unmittelbar in der Aufnahme des wenigstens einen Formwerkzeug gehaltenen Blechpaket mittels des Harzes versiegelt werden.

Gemäß einem weiteren Aspekt schafft die Erfindung ein im Zuge einer Herstellung eines Rotors einer elektrischen Maschine durchzuführendes Harzversiegelungsverfahren zum Versiegeln von Magneten in oder an wenigstens einem Blechpaket eines Rotorkerns, umfassend:
a) Bereitstellen wenigstens einer Harzversiegelungsvorrichtung nach einem der Ansprüche 1 bis 9,
b) Bereitstellen wenigstens eines Blechpakets;
c) unmittelbares Einsetzen des wenigstens einen Blechpakets in die Aufnahme;
d) Einsetzen von Magneten in Magnetaufnahmekavitäten des wenigstens einen Blechpakets;
e) Pressen des in der Aufnahme gehaltenen wenigstens einen Blechpakets mittels der Presse,
f) Zuführen von Harz, um die Magnete in den Magnetkavitäten zu versiegeln.

Die Kennzeichnung der Schritte mit a), b), c), ... dient dabei lediglich der einfacheren Bezugnahme und soll keinerlei Hinweis auf eine bestimmte Reihenfolge bedeuten. Insbesondere ist die Reihenfolge der Schritte a) und b) beliebig und weiter ist die Reihenfolge der Schritte c) und d) beliebig. Die Magnete oder einer oder mehrere der Magnete können vor, während oder nach dem Einsetzen des Blechpakets in die Aufnahme in das Blechpaket eingesetzt werden.

Vorzugsweise umfasst das Harzversiegelungsverfahren den Schritt:
f1) Zuführen von Harz direkt in das wenigstens eine Blechpaket oder durch eine Wuchtscheibe in das wenigstens eine Blechpaket.

Vorzugsweise umfasst das Harzversiegelungsverfahren den Schritt:
g) Anpassen der Aufnahme an das zu haltende Werkstück durch Verändern der Position von Kontaktflächen der Positioniereinrichtung.

Vorzugsweise umfasst das Harzversiegelungsverfahren den Schritt:
h) Durchführen eines Single-Stack-Moldings durch Halten von mit Magneten versehenen Einzelblechpakten in der Aufnahme und Durchführen der Schritte e) und f) an den Einzelblechpaketen und Zusammensetzen der versiegelten Einzelblechpakete zu einem Rotorkern.

Vorzugsweise umfasst das Harzversiegelungsverfahren den Schritt:
i) Durchführen eines Multi-Stack-Moldings durch Stapeln mehrerer Einzelblechpakete zu einem in der Aufnahme gehaltenen und mit Magneten versehenen Blechpaketstapel und Durchführen der Schritte e) und f) an dem Blechpaketstapel.

Gemäß einem weiteren Aspekt schafft die Erfindung ein Computerprogramm umfassend Anweisungen, die eine Harzversiegelungsvorrichtung nach einer der voranstehenden Ausgestaltungen dazu veranlassen, das Harzversiegelungsverfahren nach einer der voranstehenden Ausführungsformen durchzuführen.

Ausführungsformen der Erfindung betreffen ein Moldtool für Transfer-Molding von Blechpaketen ohne Rotorwelle.

Bisher werden für Blechpakete ohne Rotorwelle Werkstückträger verwendet, auf dem die Einzelblechpakete über einen zentrischen, in der Rotorwellenbohrung verlaufenden Dorn hinsichtlich der Position orientiert sind, eingesetzt. Dann ist jedoch für einen Automatikbetrieb in der industriellen Großserienfertigung eine Vielzahl von derartigen Werkstückträgern erforderlich. Für eine automatisierte Fertigungszelle muss eine große Anzahl an Werkstückträgern vorgesehen werden. Diese müssen unter anderem be- und entladen, gereinigt, erwärmt, gekühlt, grundgereinigt und konditioniert werden. Somit ist ein Stationskonzept mit Werkstückträgern aufwändig und kostenintensiv. Bei Werkstücktypenwechsel müssen mehrere Werkstückträger umgerüstet oder erneuert werden.

Entsprechend lange Rüstzeiten müssen berücksichtigt werden. Weiter ist bei Einsatz von Werkstückträgern nur eine passive Temperierung der Werkstücke möglich. Für den Moldingvorgang werden die Blechpakete (im Stand der Technik inkl. Werkstückträger) auf eine definierte Prozesstemperatur erwärmt (Bereich ca. 150...200°C). Dabei ist eine homogene Erwärmung durch das gesamte Blechpaket erwünscht. Deshalb müssen im Stand der Technik die Blechpakete zusammen mit dem Werkstückträger homogenisiert werden. Bei Prozessstörungen kühlen Blechpakete und Werkstückträger ab.

Bevorzugte Ausführungsformen der Erfindung sehen dagegen eine zentrale Aufnahme in der Moldingpresse anstelle einer Vielzahl an Werkstückträger vor. Die Blechpakete (oder der noch nicht vergossene Rotorkern) werden unmittelbar auf einer der während der Serienfertigung an der Moldingpresse verbleibenden Formwerkzeuge (z.B. Stempel) der aufgenommen und/oder positioniert.

Bei der Erfindung ist somit an einem der Formwerkzeuge der Presse selbst.eine Aufnahme ausgebildet, die zur unmittelbaren - d.h. ohne Zwischenlagerung eines Werkstückträgers - Aufnahme wenigstens eines Blechpakets eingerichtet ist,

Die unmittelbare Aufnahme der Werkstücke an dem Formwerkzeug (d.h. ohne Werkstückträger) führt zu einem, mehreren oder alle der folgenden Vorteile:
- Reduzierung von Investitionskosten
- Reduzierung von Wartungs- und Instandhaltungsaufwand
- einfachere Automation durch eine definierte Übergabe anstelle Schnittstellen zu toleranzbedingt unterschiedlichen Werkstückträgern
- konstante Prozessbedingungen anstelle von Prozesseinflüssen durch toleranzbedingt unterschiedliche Werkstückträger
- kürzere Rüstzeiten bei Werkstücktypenwechsel (zentral in der Moldingpresse)

Weiter sind aufgrund der unmittelbaren Aufnahme der Werkstücke an der Presse wahlweise aktives Heizen und/oder passives Temperieren der Werkstücke möglich. Einige Ausführungsformen der Erfindung ermöglichen eine optimierte thermische Beeinflussung des Blechpakets in der Moldingpresse durch einen beheizbaren Aufnahmedorn.

Bevorzugte Ausführungsformen der Erfindung sehen eine Aufnahme von Einzelblechpaketen ("substack") für Single-Stack-Molding und Blechpaketstapel ("stack") für Multi-Stack-Molding auf einem in das untere Moldtool der Moldingpresse integrierten, optional beheizbaren Aufnahmedorn am Innendurchmesser (Rotorwellenbohrung) des Blechpakets für ein Molding ohne Rotorwelle vor.

Einige Ausführungsformen ermöglichen eine Flexibilität hinsichtlich unterschiedlicher Werkstücktypen durch Umrüstung werkstücktypspezifischer Aufnahmedorne.

Einige Ausführungsformen sehen eine beheizte Hülse für eine Aufnahme am Außendurchmesser des zu vergießenden Rotorkerns oder Blechpakets als Alternative (oder zusätzlich) zu einem beheizten Aufnahmedorn vor.

Einige Ausführungsformen sehen Ausrichtmerkmale zur eindeutigen Winkelorientierung des Werkstücks bezogen auf die Verdrehung um die Achse der Rotorwellenbohrung vor; z.B. durch Indexstifte im Blechpaket, Orientierelemente an einer Nut-/Feder-Verbindung in der Rotorwellenbohrung des Blechpakets.

Einige Ausführungsformen sehen die Möglichkeit des Moldens direkt in Blechpaket oder durch Wuchtscheibe in Blechpaket vor.

Einige Ausführungsformen die Möglichkeit vor, den Aufnahmedorn variabel auszuführen, in der Art und Weise, dass der Dorn die Blechpakete durch radial zustellbare Spannbacken nach außen aufspreizend spannt und so auch zentriert. So können in einem gewissen Bereich mehrere Innendurchmesser von Blechpaketen aufgenommen werden.

Ausführungsbeispiele der Erfindung wird im Folgenden anhand der beigefügten Zeichnungen näher erläutert. Darin zeigt:
- Fig. 1: eine schematische Schnittdarstellung durch eine erste Ausführungsform einer Harzversiegelungsvorrichtung zur Fixierung von Magneten in einem Rotorkern mittels Harz;
- Fig. 2: eine Draufsicht auf den Rotorkern;
- Fig. 3: eine teils geschnittene Draufsicht auf ein erstes Formwerkzeug einer Presse der Harzversiegelungsvorrichtung von Fig. 1 in einer ersten Ausführungsvariante;
- Fig. 4: eine teils geschnittene Draufsicht auf ein erstes Formwerkzeug einer Presse der Harzversiegelungsvorrichtung von Fig. 1 in einer zweiten Ausführungsvariante;
- Fig. 5: eine schematische Schnittdarstellung durch eine zweite Ausführungsform der Harzversiegelungsvorrichtung;
- Fig. 6: eine teils geschnittene Draufsicht auf ein erstes Formwerkzeug einer Presse der Harzversiegelungsvorrichtung von Fig. 2 in einer ersten Ausführungsvariante; und
- Fig. 7: eine Draufsicht auf ein erstes Formwerkzeug einer Presse der Harzversiegelungsvorrichtung von Fig. 2 in einer zweiten Ausführungsvariante.

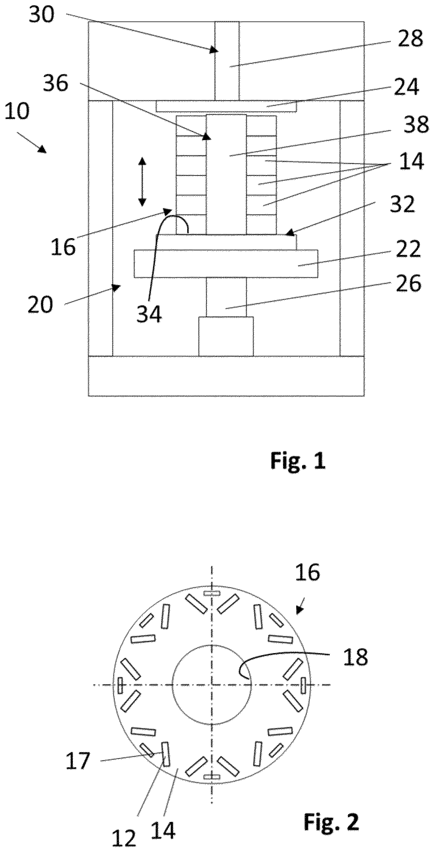

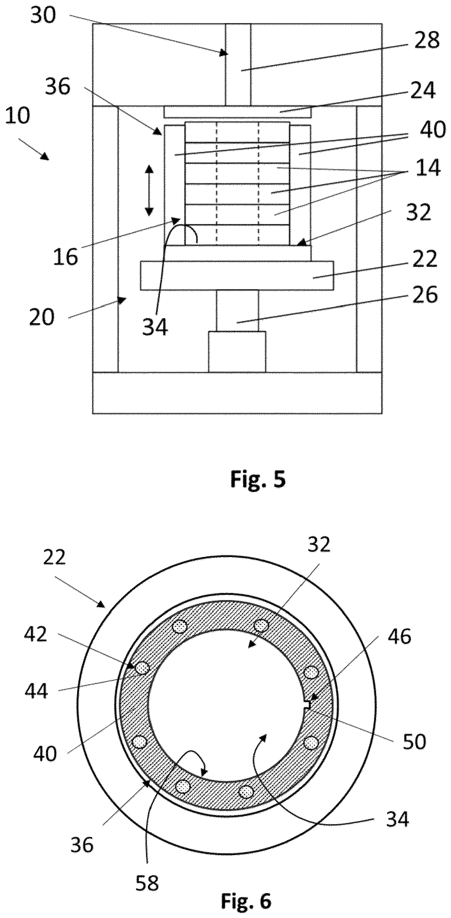

In den Fig. 1 und 5 sind unterschiedliche Ausführungsformen einer Harzversiegelungsvorrichtung 10 gezeigt. Die Harzversiegelungsvorrichtung dient zur Fixierung von Magneten 12 in einem in Fig. 2 in Draufsicht gezeigten Blechpaket 14 eines Rotorkerns 16 (Beispiel für Werkstück) mittels Harzversiegelung. Das Blechpaket 14 weist Magnetaufnahmekavitäten 17 zur Aufnahme von Magneten 12 und eine Rotorwellenöffnung 18 auf.

Eine Magnetfixierung mittels Harzversiegelung wird in der Fachsprache auch oft als "Molding" bezeichnet. In bevorzugten Ausgestaltungen ist die Harzversiegelungsvorrichtung 10 zum Durchführen des Prozesses der Magnetfixierung in Rotorblechpaketen mittels EMC (Epoxy Molding Compound, "resin") eingerichtet, wobei Einzelblechpakete (substacks) oder Blechpaketstapel beim Molding ohne Rotorwelle gehandhabt und ausgerichtet werden.

Demnach ist die Harzversiegelungsvorrichtung 10 dazu eingerichtet, z.B. bei einem Single-Stackmolding Magnete 12 in einzelnen Blechpaketen 14 mittels Harzversiegelung zu fixieren, wobei in der Rotorwellenöffnung 18 aber noch keine Rotorwelle eingefügt ist. Die so angefertigten Blechpakete 14 mit fixierten Magneten 12 können dann zu einem Rotorkern zusammengesetzt werden, und die Rotorwelle (nicht dargestellt) kann in die Rotorwellenöffnung 18 eingefügt werden.

Alternativ ist die Harzversiegelungsvorrichtung 10 dazu eingerichtet, bei einem Multi-Stackmolding mittels Harzversiegelung Magnete 12 in einem Blechpaketstapel aus mehreren aufeinander gestapelten Blechpaketen 14 noch vor Montage einer Rotorwelle zu fixieren.

Die Harzversiegelungsvorrichtung 10 weist eine Presse 20 - in der Fachsprache auch Moldingpresse genannt - mit einem ersten Formwerkzeug 22 und einem zweiten Formwerkzeug 24 auf. Die Formwerkzeuge 22, 24 werden in der Fachsprache auch Moldingtools genannt. Das erste Formwerkzeug 22 ist beispielsweise ein unteres Moldingtool der Presse 20, und das zweite Formwerkzeug 24 ist beispielsweise das obere Moldingtool der Presse 20. Die Formwerkzeuge 22, 24 sind mittels eines Aktors 26 zum Verpressen wenigstens eines darin aufgenommenen Blechpakets 14 mit Magneten 12 aufeinander zu und voneinander weg bewegbar.

Weiter weist die Presse 20 eine Harzzuführeinrichtung 28 auf, die zum Zuführen und Einpressen des Harzes, wie insbesondere EMC, in Zwischenräume zwischen Presse, Blechpaket und Magneten eingerichtet ist. Von der Harzzuführeinrichtung 28 ist in Fig. 1 und 5 nur eine EMC-Zuführung 30, beispielsweise ausgebildet als Kanal oder Kanalanordnung in dem zweiten Formwerkzeug 24, dargestellt. Die Harzzuführeinrichtung 28 kann außerdem wie üblich eine Heizquelle zum Erwärmen und Verflüssigen des Harzes und eine Druckquelle, beispielsweise ein Transferzylinder zum Einpressen des Harzes aufweisen. Der Transferzylinder kann beispielsweise einen vertikalen Hub im Bereich der EMC-Zuführung 30 ausüben.

Wenigstens eines der Formwerkzeuge 22, 24, bei den dargestellten Ausführungsbeispielen insbesondere das erste Formwerkzeug 22 (hier das untere Moldingtool) weist eine Aufnahme 32 zum unmittelbaren Aufnehmen des wenigstens einen Blechpakets 14 auf. Die Aufnahme 32 ist Teil des Formwerkzeugs 22, 24 und somit während einer Serienproduktion mehrerer Rotoren permanent vorgesehen. Zum Beispiel ist die Aufnahme 32 integraler Bestandteil eines unteren Stempels der Presse 20.

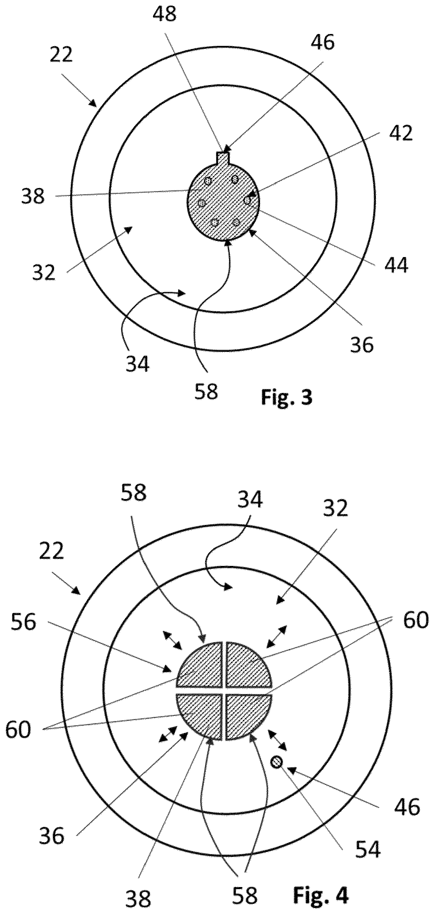

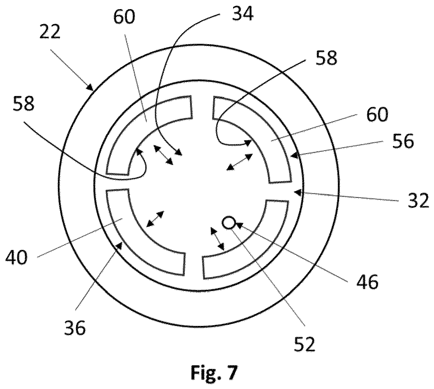

Ausführungsvarianten des ersten Formwerkzeugs 22 und der Aufnahme 32 der ersten Ausführungsform der Harzversiegelungsvorrichtung 10 sind in den Fig. 3 und 4 gezeigt. Ausführungsvarianten des ersten Formwerkzeugs 22 und der Aufnahme 32 der zweiten Ausführungsform der Harzversiegelungsvorrichtung 10 sind in den Fig. 6 und 7 gezeigt.

Wie aus den Fig. 1 und 3 bis 7 ersichtlich, weist die Aufnahme 32 eine Auflagefläche 34 zum Auflegen des wenigstens einen Blechpakets 14 und eine von der Auflagefläche 34 vorspringende Positioniereinrichtung 36 auf.

Bei der in den Fig. 1, 3 und 4 dargestellten ersten Ausführungsform der Harzversiegelungsvorrichtung 10 ist die Positioniereinrichtung 36 dazu eingerichtet, in die Rotorwellenöffnung 18 des wenigstens einen Blechpakets 14 einzugreifen. Hierzu weist die Positioniereinrichtung 36 beispielsweise einen Aufnahmedorn 38 zum Eingreifen in die Rotorwellenöffnung 18 auf.

Bei der in den Fig. 5 bis 7 dargestellten zweiten Ausführungsform der Harzversiegelungsvorrichtung 10 ist die Positioniereinrichtung 36 dazu eingerichtet, das wenigstens eine Blechpaket 14 an seinem Außendurchmesser einzufassen. Insbesondere weist die Positioniereinrichtung 36 eine Aufnahmehülse 40 zum Umgreifen des wenigstens einen Blechpakets 14 auf.

Bei weiteren, hier nicht dargestellten Ausführungsformen ist die Positioniereinrichtung 36 dazu eingerichtet, sowohl in die Rotorwellenöffnung 18 einzugreifen als auch am Außenumfang anzugreifen. Beispielsweise sind sowohl der Aufnahmedorn 38 als auch die Aufnahmehülse 40 an der Auflagefläche 34 vorgesehen.

Bei einigen Ausführungsformen, wie sie in den Fig. 3 und 6 dargestellt sind, ist die Positioniereinrichtung 36 zum direkten Temperieren des Blechpakets 14 beim Harzversiegeln mittels einer Heizeinrichtung 42 beheizbar. Beispielsweise weisen der Aufnahmedorn 38 oder die Aufnahmehülse Heizkanäle zum Durchleiten eines Heizfluids oder Heizdrähte 44 auf.

Gemäß den Fig. 3, 4, 6 und 7 weist bei einigen Ausführungsformen die Aufnahme 32 weiter eine Ausrichteinrichtung 46 auf, die zum Positionieren des wenigstens einen Blechpakets 14 in einer Umfangsrichtung durch formschlüssigen Eingriff mit dem wenigstens einen Blechpaket 14 eingerichtet ist.

Die Ausrichteinrichtung 46 kann unterschiedlich ausgebildet sein. Beispiele für Eingriffselemente der Ausrichteinrichtung 42 sind:
- eine Feder 48 - beispielsweise vorstehende Rippe oder anderer Vorsprung - an der Positioniereinrichtung 36, insbesondere dem Aufnahmedorn 38 oder der Aufnahmehülse 40, zum Bilden einer Nut-Feder-Verbindung durch Eingreifen in eine Nut an dem wenigstens einen Blechpaket 14
- eine Nut 50 an der Positioniereinrichtung 36, insbesondere dem Aufnahmedorn 38 oder der Aufnahmehülse 40, zum Bilden einer Nut-Feder-Verbindung zusammen mit einer Feder an dem wenigstens einen Blechpaket 14,
- eine Ausnehmung 52 an der Auflagefläche 34 zur Aufnahme eines an dem Blechpaket 14 vorgesehenen Indexstifts und
- ein Indexstift 54, der von der Auflagefläche 34 zum Eingreifen in eine sich axial erstreckende Ausnehmung an dem Blechpaket 14 vorsteht.

Bei einigen Ausführungsformen ist die Positioniereinrichtung 36 als integraler Bestandteil des Formwerkzeuges 22, 24 vorgesehen. Bei bevorzugten Ausführungsformen ist die Positioniereinrichtung 36 lösbar an einem die Aufnahmefläche 34 aufweisenden Stempel der Presse 20 befestigt, z.B. mittels Schrauben. Bei einigen Ausführungsformen ist ein Sortiment unterschiedlicher Positioniereinrichtungen 36 - z.B. mit unterschiedlich dimensionierter Aufnahmedornen 38 und/oder unterschiedlich dimensionierten Aufnahmehülsen 40 - vorgesehen, um die Presse 20 vor Start einer Serienfertigung eines bestimmten Rotortyps an den Rotortyp anzupassen.

Gemäß den Figuren 4 und 7 weist bei einigen Ausführungsformen die Positioniereinrichtung 36 eine Einstelleinrichtung 56 zum Einstellen des Durchmessers von Kontaktflächen 58 der Positioniereinrichtung 36 auf.

Beispielsweise weist die Positioniereinrichtung 36 als Teil der Einstelleinrichtung 56 radial verstellbare Spannbacken 60 auf, an denen die Kontaktflächen 58 ausgebildet sind. Gemäß Fig. 4 kann hierzu der Aufnahmedorn 38 in mehrere verstellbare Sektoren als Spannbacken 60 aufgeteilt sein, die radial einstellbar sind, um sie an unterschiedliche Durchmesser der Rotorwellenöffnung 18 von unterschiedlichen Rotorkernen anzupassen. Gemäß Fig. 7 können die Spannbacken 60 auch am Außenumfang des wenigstens einen Blechpakets 14 angreifen, beispielsweise ausgebildet als Sektoren der Aufnahmehülse 40.

Mit der Harzversiegelungsvorrichtung 10 lässt sich im Zuge der Herstellung eines Rotors einer elektrischen Maschine in industrieller Serienfertigung ein Harzversiegelungsverfahren mit folgenden Schritten durchführen (die Bezeichnungen a), b), ... dient nur zur einfacheren Bezugnahme und bedingt keine Aussage über eine bestimmte Reihenfolge):
a) Bereitstellen der Harzversiegelungsvorrichtung 10,
b) Bereitstellen wenigstens eines Blechpakets 14;
c) unmittelbares Einsetzen des wenigstens einen Blechpakets 14 in die Aufnahme 32;
d) Einsetzen von Magneten 12 in Magnetaufnahmekavitäten 17 des wenigstens einen Blechpakets 14;
e) Pressen des in der Aufnahme 32 gehaltenen wenigstens einen Blechpakets 14 mittels der Presse 20,
f) Zuführen von Harz, um die Magnete 12 in den Magnetkavitäten 17 zu versiegeln.

Das Harz wird bei einigen Ausführungsformen direkt in das wenigstens eine Blechpaket 14 oder durch eine Wuchtscheibe (nicht dargestellt) hindurch in das wenigstens eine Blechpaket 14 zugeführt. Mittels der Einstelleinrichtung 56 lässt sich bei einigen Ausführungsformen die Aufnahme 32 an das zu haltende Werkstück durch Verändern der Position von Kontaktflächen 58 der Positioniereinrichtung 36 anpassen. Bei einigen Ausführungsformen wird ein Single-Stack-Molding durch Halten von mit Magneten 12 versehenen Einzelblechpakten in der Aufnahme 32 und Durchführen der Schritte e) und f) an den Einzelblechpaketen und Zusammensetzen der versiegelten Einzelblechpakete zu einem Rotorkern 16 durchgeführt. Bei einigen Ausführungsformen wird ein Multi-Stack-Molding durch Stapeln mehrerer Einzelblechpakete zu einem in der Aufnahme 32 gehaltenen und mit Magneten 12 versehenen Blechpaketstapel und Durchführen der Schritte e) und f) an dem Blechpaketstapel durchgeführt.

Die Harzversiegelungsvorrichtung 10 wird - z.B. als Teil einer Anlage zur Rotorfertigung - elektronisch gesteuert. Insbesondere ist eine Steuerung (nicht dargestellt) mit Prozessor und Speicher vorgesehen, in dem ein Computerprogramm mit entsprechenden Anweisungen zum Durchführen des Harzversiegelungsverfahrens gespeichert ist.

### Bezugszeichenliste:

- 10: Harzversiegelungsvorrichtung
- 12: Magnet
- 14: Blechpaket
- 16: Rotorkern
- 17: Magnetaufnahmekavität
- 18: Rotorwellenöffnung
- 20: Presse
- 22: erstes Formwerkzeug
- 24: zweites Formwerkzeug
- 26: Aktor
- 28: Harzzuführeinrichtung
- 30: EMC-Zuführung
- 32: Aufnahme
- 34: Auflagefläche
- 36: Positioniereinrichtung
- 38: Aufnahmedorn
- 40: Aufnahmehülse
- 42: Heizeinrichtung
- 44: Heizdraht
- 46: Ausrichteinrichtung
- 48: Feder
- 50: Nut
- 52: Ausnehmung
- 54: Indexstift
- 56: Einstelleinrichtung
- 58: Kontaktfläche
- 60: Spannbacke

## Patentansprüche

1. Harzversiegelungsvorrichtung (10) zur Fixierung von Magneten (12) in einem Blechpaket (14) eines Rotorkerns (16) mittels Harzversiegelung, umfassend:
eine Presse (20) mit einem ersten und einem zweiten Formwerkzeug (22, 24), die mittels eines Aktors (26) zum Verpressen wenigstens eines darin aufgenommenen Blechpakets (14) mit Magneten (12) aufeinander zu und voneinander weg bewegbar sind, und
eine Harzzuführeinrichtung (28) zum Zuführen und Einpressen des Harzes in Zwischenräume zwischen Presse (20), Blechpaket (14) und Magneten (12),
wobei wenigstens eines der Formwerkzeuge (22, 24) eine Aufnahme (32) zum unmittelbaren Aufnehmen des wenigstens einen Blechpakets (14) aufweist, die eine Auflagefläche (34) zum Auflegen des wenigstens einen Blechpakets (14) und
eine von der Auflagefläche (34) vorspringende Positioniereinrichtung (36) aufweist, die dazu eingerichtet ist, in eine Rotorwellenöffnung (18) des wenigstens einen Blechpakets (14) einzugreifen und/oder das wenigstens eine Blechpaket (14) an seinem Außendurchmesser einzufassen.

2. Harzversiegelungsvorrichtung (10) nach Anspruch 1, **dadurch gekennzeichnet,**
**dass** die Positioniereinrichtung (36)
2.1 einen Aufnahmedorn (38) zum Eingreifen in die Rotorwellenöffnung (18) und/oder
2.2 eine Aufnahmehülse (40) zum Umgreifen des wenigstens einen Blechpakets (14) aufweist.

3. Harzversiegelungsvorrichtung (10) nach einem der voranstehenden Ansprüche, **gekennzeichnet durch** eine Heizeinrichtung (42) zum Beheizen der Positioniereinrichtung (36).

4. Harzversiegelungsvorrichtung (10) nach einem der voranstehenden Ansprüche, **dadurch gekennzeichnet,**
**dass** das erste Formwerkzeug (22) ein unteres Formwerkzeug ist, das mit der Positioniereinrichtung (36) versehen ist.

5. Harzversiegelungsvorrichtung (10) nach einem der voranstehenden Ansprüche, **dadurch gekennzeichnet,**
**dass** die Positioniereinrichtung (36) austauschbar an der Auflagefläche (34) vorgesehen ist.

6. Harzversiegelungsvorrichtung (10) nach Anspruch 5, **gekennzeichnet durch** ein Sortiment unterschiedlich dimensionierter Positioniereinrichtungen (36).

7. Harzversiegelungsvorrichtung (10) nach einem der voranstehenden Ansprüche, **dadurch gekennzeichnet,**
**dass** die Aufnahme (32) eine Ausrichteinrichtung (46) aufweist, die zum Positionieren des wenigstens einen Blechpakets (14) in einer Umfangsrichtung durch formschlüssigen Eingriff mit dem wenigstens einen Blechpaket (14) eingerichtet ist.

8. Harzversiegelungsvorrichtung (10) nach Anspruch 7, **dadurch gekennzeichnet,**
**dass** die Ausrichteinrichtung (46) wenigstens ein Eingriffselement aus der Gruppe aufweist, die eine Feder (48) an der Positioniereinrichtung (36) zum Bilden einer Nut-Feder-Verbindung durch Eingreifen in eine Nut an dem wenigstens einen Blechpaket (14), eine Nut (50) an der Positioniereinrichtung (36) zum Bilden einer Nut-Feder-Verbindung zusammen mit einer Feder an dem wenigstens einen Blechpaket (14), eine Ausnehmung (52) an der Auflagefläche (34) zur Aufnahme eines an dem Blechpaket (14) vorgesehenen Indexstifts und einen Indexstift (54), der von der Auflagefläche (34) zum Eingreifen in eine sich axial erstreckende Ausnehmung an dem Blechpaket (14) vorsteht, umfasst.

9. Harzversiegelungsvorrichtung (10) nach einem der voranstehenden Ansprüche, **dadurch gekennzeichnet,**
**dass** die Positioniereinrichtung (36)
9.1 eine Einstelleinrichtung (56) zum Einstellen des Durchmessers von Kontaktflächen (58) der Positioniereinrichtung (36) und/oder
9.2 radial verstellbare Spannbacken (60) aufweist.

10. Anordnung umfassend eine Harzversiegelungsvorrichtung (10) nach einem der voranstehenden Ansprüche und wenigstens ein darin zu haltendes Blechpaket (14) für einen Rotorkern (16), wobei das wenigstens eine Blechpaket (14) Magnetaufnahmekavitäten (17) zur Aufnahme von Magneten (12) und eine Rotorwellenöffnung (18) zur Aufnahme einer Rotorwelle aufweist.

11. Verwendung einer Harzversiegelungsvorrichtung (10) nach einem der Ansprüche 1 bis 9 bei der Harzversiegelung, bei der Magnete (12) an oder in dem wenigstens einen unmittelbar in der Aufnahme (32) des wenigstens einen Formwerkzeugs (22, 24) gehaltenen Blechpaket (14) mittels des Harzes versiegelt werden.

12. Im Zuge einer Herstellung eines Rotors einer elektrischen Maschine durchzuführendes Harzversiegelungsverfahren zum Versiegeln von Magneten (12) in oder an wenigstens einem Blechpaket (14) eines Rotorkerns (16), umfassend:
a) Bereitstellen wenigstens einer Harzversiegelungsvorrichtung (10) nach einem der Ansprüche 1 bis 9,
b) Bereitstellen wenigstens eines Blechpakets (14);
c) unmittelbares Einsetzen des wenigstens einen Blechpakets (14) in die Aufnahme (32);
d) Einsetzen von Magneten (12) in Magnetaufnahmekavitäten (17) des wenigstens einen Blechpakets (14);
e) Pressen des in der Aufnahme (32) gehaltenen wenigstens einen Blechpakets (14) mittels der Presse (20),
f) Zuführen von Harz, um die Magnete (12) in den Magnetkavitäten (17) zu versiegeln.

13. Harzversiegelungsverfahren nach Anspruch 12, **gekennzeichnet durch** wenigstens einen oder mehrere der Schritte:
f1) Zuführen von Harz direkt in das wenigstens eine Blechpaket (14) oder **durch** eine Wuchtscheibe in das wenigstens eine Blechpaket (14);
g) Anpassen der Aufnahme (32) an das zu haltende Werkstück **durch** Verändern der Position von Kontaktflächen (58) der Positioniereinrichtung (36);
h) Durchführen eines Single-Stack-Moldings **durch** Halten von mit Magneten (12) versehenen Einzelblechpakten in der Aufnahme (32) und Durchführen der Schritte e) und f) an den Einzelblechpaketen und Zusammensetzen der versiegelten Einzelblechpakete zu einem Rotorkern (16);
i) Durchführen eines Multi-Stack-Moldings **durch** Stapeln mehrerer Einzelblechpakete zu einem in der Aufnahme (32) gehaltenen und mit Magneten versehenen Blechpaketstapel und Durchführen der Schritte e) und f) an dem Blechpaketstapel.

14. Computerprogramm umfassend Anweisungen, die eine Harzversiegelungsvorrichtung (10) nach einem der Ansprüche 1 bis 9 dazu veranlassen, ein Harzversiegelungsverfahren nach einem der Ansprüche 12 oder 13 durchzuführen.
